# EUROPEAN PATENT APPLICATION

(11) **EP 4 806 657 A1**
(43) Date of publication of application: **16.09.2026**
(21) Application number: 26158080.7
(22) Date of filing: 12.02.2026
(51) Int. Cl.: B41J 2/21, B41J 3/407, B41M 5/025, D06P 5/24

(54) **IMAGE FORMING METHOD, IMAGE FORMING SYSTEM, AND CARRIER MEANS**

(30) Priority: 13.03.2025 JP 2025040040
(71) Applicant: Ricoh Company, Ltd., Tokyo 143-8555 (JP)
(72) Inventor: HIRANO, Masanori, Tokyo, 143-8555 (JP)
(74) Representative: SSM Sandmair

(57) **Abstract**

An image forming method for forming a partially glossy image including a matte expression portion and a gloss expression portion, based on image data input to a liquid discharge apparatus, the image data being divided into matte-expression-portion data and gloss-expression-portion data, the image forming method including: forming (S7) the matte expression portion on a cloth fabric based on the matte-expression-portion data; producing (S6) a transfer film having an inverted image of the gloss expression portion by performing printing on a film base based on the gloss-expression-portion data; and forming (S7) the gloss expression portion by performing transfer onto the cloth fabric using the transfer film.

## Description

### BACKGROUND

### Technical Field

The present disclosure relates to an image forming method, an image forming system, and carrier means.

### Related Art

Recent inkjet printing techniques can impart characteristics other than image quality, for example, textures such as glossiness, a metallic look, and a sense of depth to images. Techniques for imparting such textures other than image quality are called decoration techniques, and are used in signboards, advertisements, and package printing.

Among the decoration techniques, a technique for forming a partially glossy image is widely known. This technique allows coexistence of a matte-tone non-glossy image and a gloss-tone glossy image and imparts glossiness to a portion intended to be conspicuous. The technique not only can attract attention by glossiness but also can express hard textures of metal and glass and a sense of depth by bright and dark areas. Glossiness imparting means include a method for overcoating a printed image with clear ink (see, for example, Japanese Unexamined Patent Application Publication No. 2001-039006).

However, when the method using clear ink is applied to textile printing to form a partially glossy image on a cloth fabric such as a T-shirt, the clear ink is to be thickly applied to smooth the image surface. This impairs softness and wearing comfort of the cloth fabric.

Japanese Unexamined Patent Application Publication No. 2024-143348 discloses a printing method as a method for forming a partially glossy image in textile printing. In the printing method, glitter material is sprinkled using a brush or the like over an image printed on a cloth fabric and is fixed to the cloth fabric by heat-pressing to form the glitter-material-attached image on the cloth (fabric). However, decoration expressed by imparting the glitter material is limited to the expression implemented by glittering grains. That is, the range of decoration expression is narrow.

### SUMMARY

The present disclosure described herein provides an image forming method for forming a partially glossy image including a matte expression portion and a gloss expression portion, based on image data input to a liquid discharge apparatus, the image data being divided into matte-expression-portion data and gloss-expression-portion data. The image forming method includes forming the matte expression portion on a cloth fabric based on the matte-expression-portion data, producing a transfer film having an inverted image of the gloss expression portion by performing printing on a film base based on the gloss-expression-portion data, and forming the gloss expression portion by performing transfer onto the cloth fabric using the transfer film.

The present disclosure described herein provides carrier means carrying computer readable code for controlling a computer system to carry out the image forming method described above.

The present disclosure described herein provides an image forming system for forming a partially glossy image including a matte expression portion and a gloss expression portion, based on image data input to a liquid discharge apparatus, the image data being divided into matte-expression-portion data and gloss-expression-portion data. The image forming system includes a matte-expression-portion forming unit that forms the matte expression portion on a cloth fabric based on the matte-expression-portion data, a transfer-film production unit that produces a transfer film having an inverted image of the gloss expression portion by performing printing on a film base based on the gloss-expression-portion data, and a gloss-expression-portion forming unit that forms the gloss expression portion by performing transfer onto the cloth fabric using the transfer film. Formation of the matte expression portion and production of the transfer film are performed in parallel.

According to one aspect of the present disclosure, an image forming method is provided which implements a wide range of decoration expression without impairing softness and wearing comfort of a cloth fabric in textile printing for forming a partially glossy image on the cloth fabric.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating an example of an attachment state of pigment ink in direct-to-garment (DTG) printing;
FIG. 2 is a schematic diagram illustrating an example of a configuration of a transfer film;
FIG. 3 is a schematic diagram illustrating an example of a surface state when an image is formed on a fabric by DTF printing;
FIG. 4 is a diagram illustrating an example of dividing image data into matte-expression-portion data and gloss-expression-portion data;
FIG. 5 is a diagram illustrating an example case where a gap is caused in a print region by positional misalignment between a matte expression portion and a gloss expression portion;
FIG. 6 is a diagram illustrating a specific example in which enlargement of gloss-expression-portion data results in misalignment between the matte expression portion and the gloss expression portion;
FIGs. 7A to 7D are schematic diagrams illustrating a specific example of dilation processing;
FIG. 8 is a diagram illustrating a specific example of the matte-expression-portion data including an overlap region in an outer edge portion;
FIG. 9 is a diagram illustrating a specific example of correction of applying gradation in an outer edge portion of the gloss-expression-portion data toward an end portion;
FIG. 10 is a flowchart illustrating an example of a process of dividing image data into a matte expression portion and a gloss expression portion in an image forming method;
FIG. 11 is a perspective view of an example of a liquid discharge apparatus which is an example of a matte-expression-portion forming unit;
FIG. 12 is a plan view of an example of the liquid discharge apparatus which is an example of the matte-expression-portion forming unit;
FIG. 13 is a perspective view of an example of the liquid discharge apparatus which is an example of the matte-expression-portion forming unit and illustrates the liquid discharge apparatus whose covers are open;
FIG. 14 is a plan view of an example of the liquid discharge apparatus which is an example of the matte-expression-portion forming unit and illustrates the liquid discharge apparatus whose covers are open;
FIG. 15 is a front view of an example of a carriage located above a stage;
FIG. 16 is a plan view of an example of the stage and the carriage;
FIG. 17 is a block diagram illustrating an example of a hardware configuration of the liquid discharge apparatus which is an example of the matte-expression-portion forming unit;
FIG. 18 is a block diagram illustrating an example of a functional configuration of a controller of the liquid discharge apparatus which is an example of the matte-expression-portion forming unit;
FIG. 19 is a perspective view of an example of a liquid discharge apparatus which is an example of a transfer-film production unit;
FIG. 20 is a diagram illustrating an example of a configuration of the liquid discharge apparatus which is an example of the transfer-film production unit;
FIG. 21 is a block diagram illustrating an example of a hardware configuration of the liquid discharge apparatus which is an example of the transfer-film production unit;
FIG. 22 is a diagram illustrating an example of a configuration of a heater of the liquid discharge apparatus which is an example of the transfer-film production unit;
FIG. 23 is a schematic diagram illustrating an example of a configuration of the matte-expression-portion forming unit and the transfer-film production unit in an image forming system according to a first embodiment;
FIG. 24 is a schematic diagram illustrating an example of a configuration of a printing unit in an image forming system according to a first modification of the first embodiment; and
FIG. 25 is a schematic diagram illustrating an example of a configuration of a printing unit in an image forming system according to a second modification of the first embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a", "an", and "the" are intended to include the plural forms as well, unless the context clearly indicates otherwise.

DTG printing is a method for printing an image by discharging coloring ink from an inkjet head directly onto the surface of a fabric such as a T-shirt. A colorant (such as a pigment) included in the ink is fixed to fabric fibers to color the fabric. Materials (e.g., polyester fibers) to which a pigment or the like is difficult to fix are subjected to pretreatment for assisting fixing by a crosslinking reaction or an aggregation reaction with the ink and then to inkjet printing.

A feature of DTG printing is that a colorant penetrates into fabric fibers (in the case of a dye) or adheres around fibers (in the case of a pigment) to form an image. Since the colorant is extremely fine, the colorant adheres to each fiber. The fabric is made of threads that are fiber bundles, and is completed as a cloth fabric by weaving the threads. The surface of the fabric has voids and a woven structure called a weave, in which threads are complicatedly interlaced, and thus has a highly uneven surface. When ink is sprayed onto the surface of the fabric by inkjet, the ink adheres to the surface of the fibers or the weave.

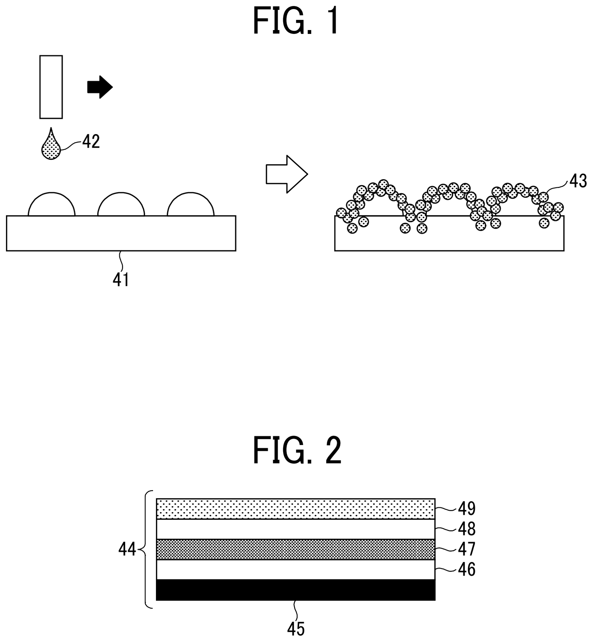

FIG. 1 is a schematic diagram illustrating an example of an attachment state of pigment ink in DTG printing. As described above, a cloth fabric 41 has an uneven surface. A pigment 43 is very fine relative to unevenness of the surface of the cloth fabric 41. Therefore, when pigment ink 42 is discharged from a discharge head onto the surface of the cloth fabric 41, unevenness and voids of the fibers and the weave remain on the surface of a printed image as illustrated on the right side of FIG. 1. Consequently, the appearance of the printed image has a matte finish.

Direct-to-film (DTF) printing is a method for printing an image by producing a transfer film and then transferring the image by heat onto a fabric, such as a T-shirt. The fabric serves as a medium. FIG. 2 is a schematic diagram illustrating an example of a configuration of a transfer film. A transfer film 44 includes a film base 45, on which a release layer 46, a color ink layer 47, a white ink layer 48, and an adhesive layer 49 are stacked in this order. The white ink layer 48 functions as an underlayer for concealing the color of the surface of the fabric when transfer is performed. The adhesive layer 49 can be formed by sprinkling hot-melt powder and then applying heat.

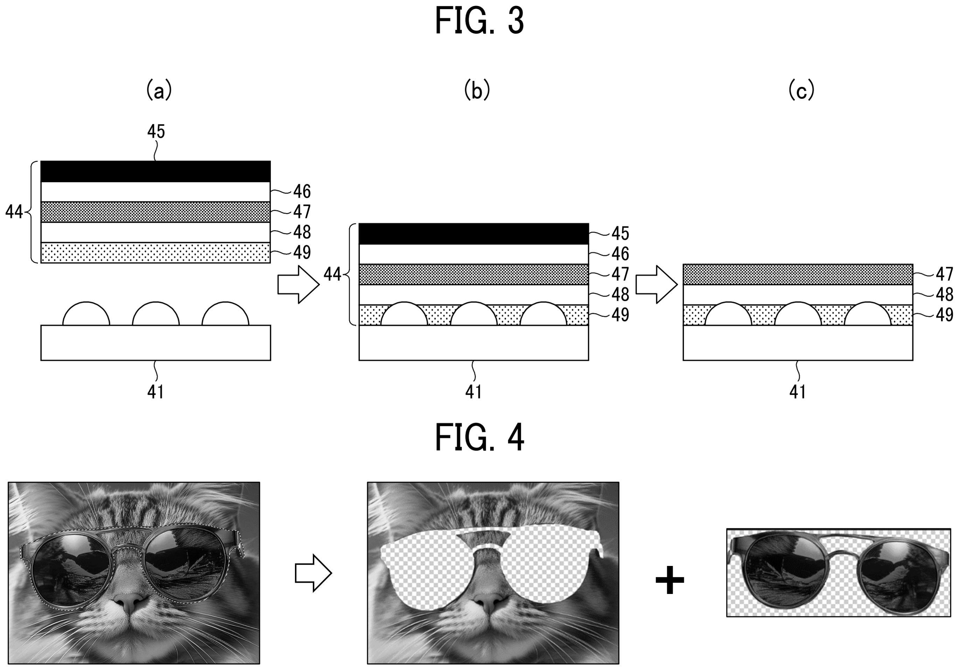

FIG. 3 is a schematic diagram illustrating an example of a surface state when an image is formed on a fabric by DTF printing. FIG. 3(a) illustrates the cloth fabric 41 and the transfer film 44 before transfer is performed. The transfer film 44 is brought into contact with the cloth fabric 41 and is heat-pressed. Then, the hot-melt powder in the adhesive layer 49 remelts to fix the transfer film 44 onto the surface of the cloth fabric 41 as illustrated in FIG. 3(b). After the fixing ends, the film base 45 and the release layer 46 are peeled off, so that image formation ends as illustrated in FIG. 3(c). The color ink layer 47 remains attached to the film base 45 until immediately before the peeling. Thus, smoothness and uniformity of the surface of the film base 45 remain in the color ink layer 47 even after the film base 45 is peeled off, resulting in a highly glossy finish. The melted adhesive layer 49 is solidified along the threads and the weave. Thus, the formed image has appropriate stretchability and has a less foreign substance sensation compared to a case where resin-based ink is screen-printed on the surface of the fabric.

A combination of the two printing methods, i.e., DTG printing and DTF printing implements matte printing expression and gloss printing expression in textile printing. Specifically, input image data is divided into a portion for matte expression and a portion for gloss expression. The portion for matte expression is printed by DTG printing and the portion for gloss expression is printed by DTF printing.

An image forming method, an image forming system, and a program will be described in detail below with reference to the drawings.

In the image forming method, an inkjet printing apparatus performs printing based on image data input to the inkjet printing apparatus to form a partially glossy image on a cloth fabric.

The image data is divided into matte-expression-portion data and gloss-expression-portion data.

The partially glossy image includes a matte expression portion and a gloss expression portion.

FIG. 4 is a diagram illustrating an example of dividing image data into matte-expression-portion data and gloss-expression-portion data. When glossiness is imparted to a sunglasses portion in a photograph, the image data is divided such that the sunglasses portion serves as the gloss-expression-portion data and the other portion serves as the matte-expression-portion data. DTG printing is performed based on the matte-expression-portion data to form the matte expression portion and DTF printing is performed based on the gloss-expression-portion data to form the gloss expression portion to obtain a partially glossy image in which glossiness is imparted to the sunglasses portion. Since the gloss expression portion is formed by DTF printing, the gloss-expression-portion data is subjected to processing for inverting the original image data.

In division of the image data, the gloss-expression-portion data may be designated through artificial intelligence (AI) processing. For example, regions extracted as the sunglasses portion in FIG. 4 by AI processing are displayed as candidates to allow the user to select the sunglasses portion.

In an image forming method according to a first embodiment, the image data is input as divided pieces of data, i.e., the matte-expression-portion data and the gloss-expression-portion data. In the first embodiment, since the previously divided pieces of image data, i.e., the matte-expression-portion data and the gloss-expression-portion data are input, printing can be separately performed using applications suitable for the matte-expression-portion data and the gloss-expression-portion data. For example, paint software suitable for illustration creation is used for the matte-expression-portion data and design software that can handle vector data is used for the gloss-expression-portion data.

An image forming method according to a first modification includes an image data division step of dividing image data into matte-expression-portion data and gloss-expression-portion data based on designated data input to the inkjet printing apparatus. The image data division step enables selection of different expressions of gloss and matte from single image data.

The following describes a matte-expression-portion formation step, a transfer-film production step, and a gloss-expression-portion formation step of the image forming method according to the first embodiment including the first modification.

The image forming method includes the matte-expression-portion formation step of forming the matte expression portion by performing printing on a cloth fabric based on the matte-expression-portion data, the transfer-film production step of producing a transfer film having an inverted image of the gloss expression portion by performing printing on a film base based on the gloss-expression-portion data, and the gloss-expression-portion formation step of forming the gloss expression portion by performing transfer onto the cloth fabric using the transfer film.

In the matte-expression-portion formation step, DTG printing is performed to form an image by discharging ink including a colorant onto a cloth fabric from an inkjet head. Printing is performed based on the matte-expression-portion data, so that the matte expression portion is formed on the cloth fabric.

Before the ink is discharged onto the cloth fabric, a pretreatment liquid including a coagulant may be discharged. Application of the pretreatment liquid onto the cloth fabric in advance facilitates fixing even for a medium on which a pigment is difficult to fix.

In the transfer-film production step, DTF printing is performed to form an image by discharging ink including a colorant onto a film base from an inkjet head. Printing is performed based on the gloss-expression-portion data, so that a transfer film having an inverted image of the gloss expression portion is produced.

The transfer film includes a film base, a release layer, a color ink layer, a white ink layer, and an adhesive layer illustrated in FIG. 2, for example. In this case, the color ink layer and the white ink layer correspond to the inverted image.

An example of a method for producing a transfer film will be specifically described below. Ink including a colorant is discharged onto the film base having the release layer on the surface from the inkjet head based on the gloss-expression-portion data to form the inverted image of a glossy image. White ink is then discharged likewise according to the inkjet method to form the white ink layer. The white ink layer not only expresses white as the color of the image but also has a role of concealing the color of the cloth fabric when the transfer film is transferred. Thus, the white ink layer prevents the color of the cloth fabric from impairing the color tone of the printed image. Thereafter, hot-melt powder is sprinkled on the white ink layer and is melted by heat to form an adhesive layer. Thus, the transfer film is completed.

In the gloss-expression-portion formation step, heat-pressure transfer is performed onto the cloth fabric using the transfer film produced in the transfer-film production step, so that the gloss expression portion is formed. Thus, the formation of the partially glossy image is completed.

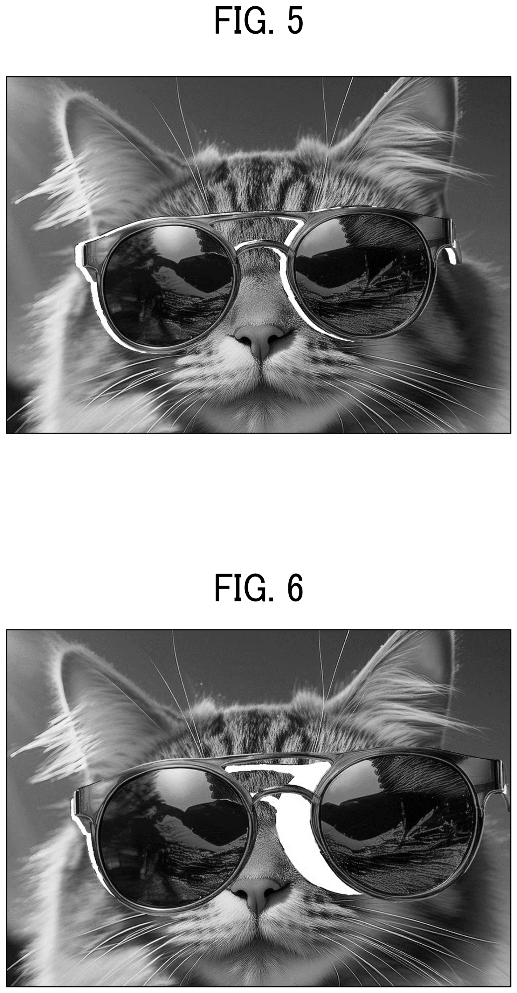

In the case where image data is divided into matte-expression-portion data and gloss-expression-portion data and printing is performed separately, an issue of positional misalignment occurs when the resultant images are combined. FIG. 5 is a diagram illustrating an example case where a gap is caused in a print region because of the positional misalignment between the matte expression portion and the gloss expression portion. In DTG printing, when a T-shirt serving as a medium is mounted to a printer, a method called dressing for mounting the T-shirt by putting the T-shirt onto a platen stage is commonly used. During the dressing, the cloth fabric is easily misaligned. During heat pressing that is performed as fixing processing, the cloth fabric often elongates or deforms due to tension set when the cloth fabric is mounted.

To make positional misalignment less conspicuous, in the image forming method according to embodiments of the present disclosure, it is preferable to perform connection correction processing of any one of (1) to (3) as follows:
(1) Dilation processing on gloss-expression-portion data;
(2) Creating an overlap region in matte-expression-portion data; and
(3) Omission of a white ink layer.

The dilation processing on the gloss-expression-portion data will be described. Producing the transfer film such that the gloss-expression-portion data is slightly enlarged can relax the requested alignment accuracy at the time of transfer. However, simply increasing the image size of the gloss-expression-portion data may result in misalignment between the matte expression portion and the gloss expression portion. FIG. 6 is a diagram illustrating a specific example in which enlargement of the gloss-expression-portion data results in misalignment between the matte expression portion and the gloss expression portion. The gloss expression portion (i.e., the sunglasses portion) in FIG. 5 is enlarged by 1.2 times and printed. The enlargement makes it easier to conceal the gap caused by positional misalignment at the left glass portion of the sunglasses. However, the right glass portion is shifted greatly from the original position.

In an embodiment, the dilation processing on the gloss-expression-portion data is performed. This can reduce or prevent the occurrence of the gap caused by positional misalignment by aligning the matte expression portion and the gloss expression portion with each other. In the present disclosure, the dilation processing refers to processing of enlarging the gloss-expression-portion data by copying pixel data in an outer edge portion of the gloss-expression-portion data and arranging the copied pixel data at positions adjacent to the pixel data in the outer edge portion. A specific example of the dilation processing will be described below.

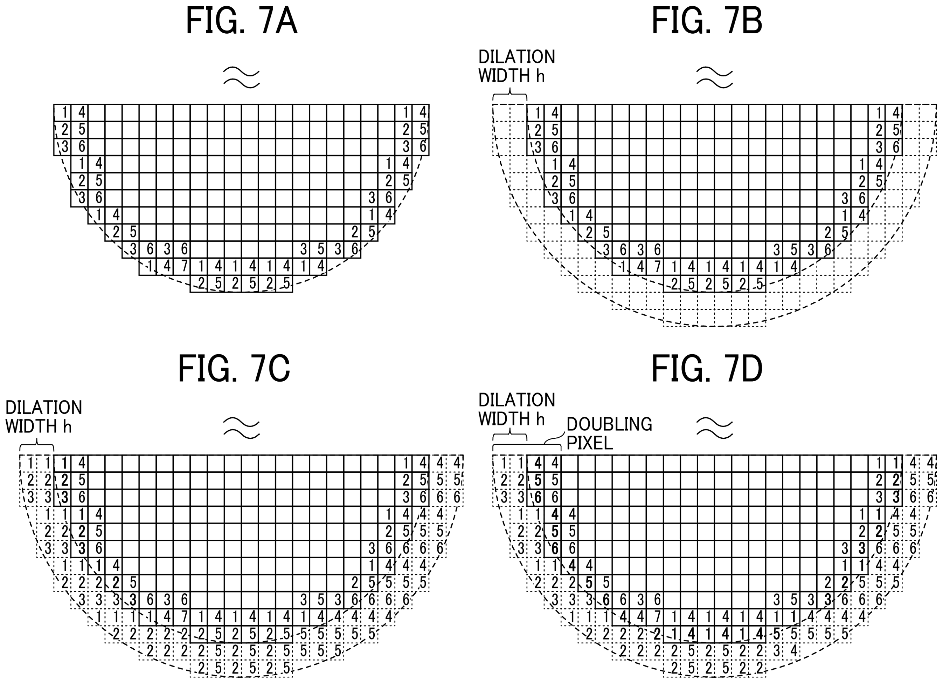

FIGs. 7A to 7D are schematic diagrams illustrating a specific example of the dilation processing. For simplification, a dilation width is illustrated as two pixels. FIG. 7A illustrates the gloss-expression-portion data before the dilation processing. Numerical values in square frames indicate pixel values. An image and pixel values in a region not related to the processing are omitted. FIG. 7B is a diagram illustrating pixel data to be arranged by the dilation processing as empty pixels.

FIG. 7C is a diagram illustrating an example in which pixel values in an image outer edge portion adjacent to the positions of the empty pixels are copied to the empty frames in the horizontal direction. For empty frames not having the horizontal pixels to be copied, copying is performed from an upper pixel toward a lower pixel, and remaining empty frames are filled with an average of copied values therearound.

In FIG. 7D, the pixels of the image outer edge portion corresponding to the dilation width are increased by two times (i.e., doubling), and the image outer edge portion is enlarged in horizontal and vertical directions. For example, when an image including values "4" and "5" is dilated by a width of two pixels, pixel values are corrected so that the values "4", "4", "5", "5" are consecutive. For empty frames in the vertical direction, doubling is performed in the vertical direction. Each empty frame is filled with an average of copied values around the empty frame.

The dilation processing is not limited to the two examples described above. For example, as in error diffusion processing, pixel values may be quoted from pixel values of the outer edge portion at a predetermined ratio in accordance with a distance between the position of each empty frame and the outer edge of the gloss-expression-portion data and averaged. The pixel values in the empty dilation positions may be automatically generated using an AI image generation function.

The width enlarged by the dilation processing is preferably greater than or equal to 0.5 mm and less than or equal to 2 mm. When the width is greater than or equal to 0.5 mm, a gap caused by positional misalignment is easily concealed. When the width is less than or equal to 2 mm, disturbance of the balance of the original image data can be avoided.

Creating an overlap region in the matte-expression-portion data will be described. When image data is divided such that the matte-expression-portion data and the gloss-expression-portion data have a completely exclusive relationship, if positional misalignment or shape distortion occurs, an unprinted region protrudes from a mismatched portion and the image shift becomes conspicuous.

In an embodiment, the matte-expression-portion data has an overlap region in the outer edge portion. This can relax the requested alignment accuracy at the time of transfer. In the present disclosure, the overlap region refers to a region in which the matte expression portion and the gloss expression portion overlap when the partially glossy image is formed.

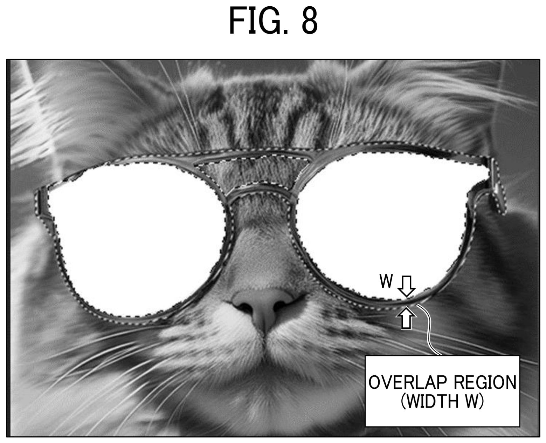

FIG. 8 is a diagram illustrating a specific example of the matte-expression-portion data including the overlap region in the outer edge portion. The matte-expression-portion data also includes, as the overlap region, a frame portion of the sunglasses that is included in the gloss-expression-portion data. When the gloss expression portion is formed, transfer is performed such that the frame portion serving as the overlap region overlaps. This can reduce or prevent the occurrence of a gap due to positional misalignment by aligning the matte expression portion and the gloss expression portion with each other.

The overlap region preferably has a width of 0.5 mm or greater. When the width is greater than or equal to 0.5 mm, a gap caused by positional misalignment is easily concealed.

Correction for applying gradation may be performed in the overlap region of the matte-expression-portion data toward the end portion. By gradually making the matte expression portion pale in a gradation manner, an amount of adhered ink in the overlap region is reduced stepwise. This can make an elevation of the overlap region less conspicuous when the gloss expression portion is transferred over the matte expression portion.

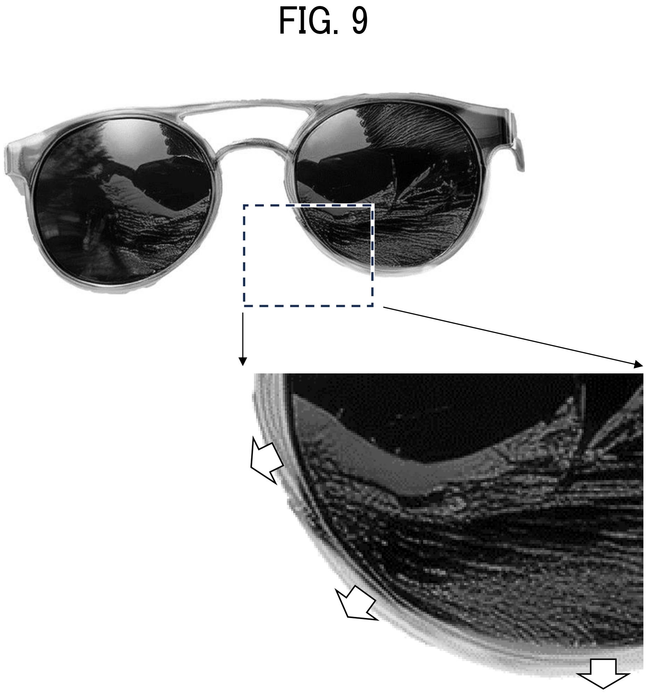

Correction for applying gradation may be performed in the gloss-expression-portion data toward the end portion. FIG. 9 is a diagram illustrating a specific example of correction of applying gradation in the outer edge portion of the gloss-expression-portion data toward the end portion. In this case, the glossy portion gradually reduces toward the end portion of the gloss expression portion. This allows smooth switching between the matte texture of the matte expression portion and the glossiness of the gloss expression portion and can reduce the unnatural bonding.

Omission of the white ink layer will be described. In DTF printing, the development of binder ink, which is replacement of hot-melt powder that functions as an adhesive to a cloth fabric, has recently been underway. Thus, it has become possible to form an adhesive layer with binder ink without a white ink underlayer that has been formed for adhesion of hot-melt powder. The white ink underlayer functions to adhere hot-melt powder and also reset the influence of the color of the cloth fabric. Not forming the white ink layer allows the cloth fabric color and a DTG printed image printed in advance to be shown from beneath through a DTF image transferred over the DTG printed image.

In an embodiment, the white ink layer is not formed over the inverted image in the transfer-film production step. This allows the matte expression portion to be shown from beneath through the gloss expression portion. In this case, it is preferable not to omit a portion of the matte-expression-portion data corresponding to the gloss-expression-portion data. By not performing omission, an image visible through at a target portion serves as an alignment guideline at the time of transfer. By causing the same image to be shown through from beneath, multiple color development is achieved by DTG printing and DTF printing, enhancing color development of the gloss expression portion.

The connection correction processing of one of (1) to (3) may be performed. Alternatively, the connection correction processing of two or more of (1) to (3) may be performed in combination.

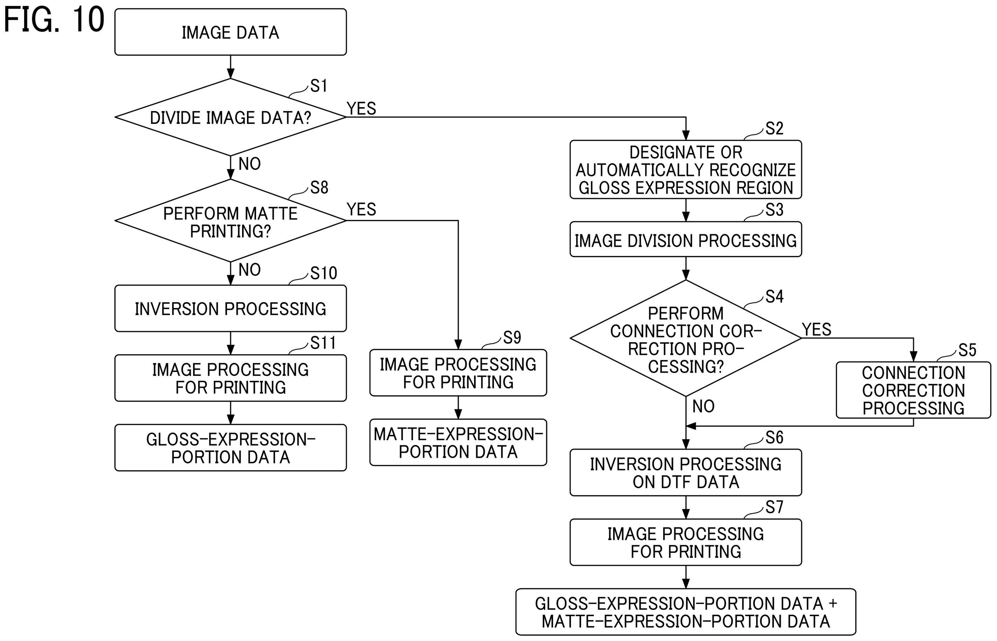

FIG. 10 is a flowchart illustrating an example of a process of dividing image data into a matte expression portion and a gloss expression portion in the image forming method. In step S1, whether to divide image data is determined. Examples of an image data division method include a method using a commercially available image editing application and a method using an image processing function of a printer system for division. The divided pieces of image data are requested to have the same resolution. The divided pieces of image data may be stored as separate image data files or may be merged into a single data file and stored as package data for decoration printing.

When the image data is divided (Yes in step S1), the process proceeds to step S2, in which a region subjected to gloss expression in the image data is designated. The region subjected to gloss expression may be designed using AI-based automatic recognition as described above. In step S3, an image data division process is performed based on the designated region.

In step S4, whether to perform the connection correction processing is determined. When the connection correction processing is performed (Yes in step S4), one or more of (1) the dilation processing on gloss-expression-portion data, (2) creating an overlap region in matte-expression-portion data, and (3) omission of the white ink layer are selectively performed in step S5. The process then proceeds to step S6. When the connection correction processing is not performed (No in step S4), the process proceeds to step S6 from step S4.

In step S6, inversion processing is performed on DTF data. An inverted image is formed on the transfer film based on the DTF data, so that an image having the original orientation is obtained after the transfer.

In step S7, the processed image data is further processed as printing data, so that gloss-expression-portion data and matte-expression-portion data are obtained.

When the image data is not divided (No in step S1), the process proceeds to step S8 from step S1. In step S8, whether to perform matte printing is determined. When matte printing is performed (Yes in step S8), image processing for printing is performed in step S9, so that matte-expression-portion data is obtained. When matte printing is not performed (No in step S8), the inversion processing is performed in step S10 and image processing for printing is performed in step S11, so that gloss-expression-portion data is obtained.

The image forming method according to embodiments of the present disclosure uses two printing schemes, namely, DTG printing (i.e., the matte-expression-portion formation step) and DTF printing (i.e., the transfer-film production step and the gloss-expression-portion formation step).

An image forming system according to embodiments of the present disclosure includes a matte-expression-portion formation means that performs the matte-expression-portion formation step, a transfer-film production means that performs the transfer-film production step, and a gloss-expression-portion formation means that performs the gloss-expression-portion formation step.

For example, three embodiments described below are applicable to the image forming system.

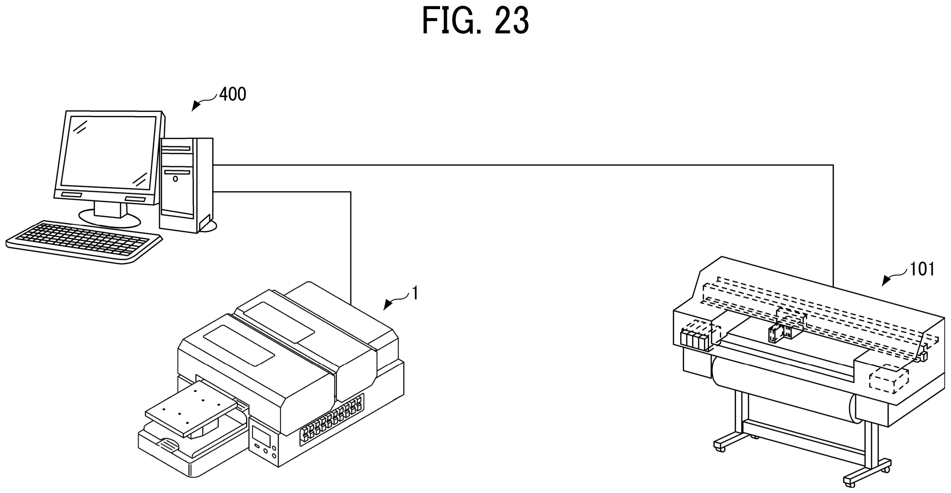

As illustrated in FIG. 23, an image forming system according to a first embodiment includes a matte-expression-portion forming unit 1 as an example of the matte-expression-portion formation means, a transfer-film production unit 101 as an example of the transfer-film production means, and a gloss-expression-portion forming unit as an example of the gloss-expression-portion formation means, and performs the matte-expression-portion formation step and the transfer-film production step in parallel. Performing the matte-expression-portion formation step and the transfer-film production step in parallel can increase the productivity.

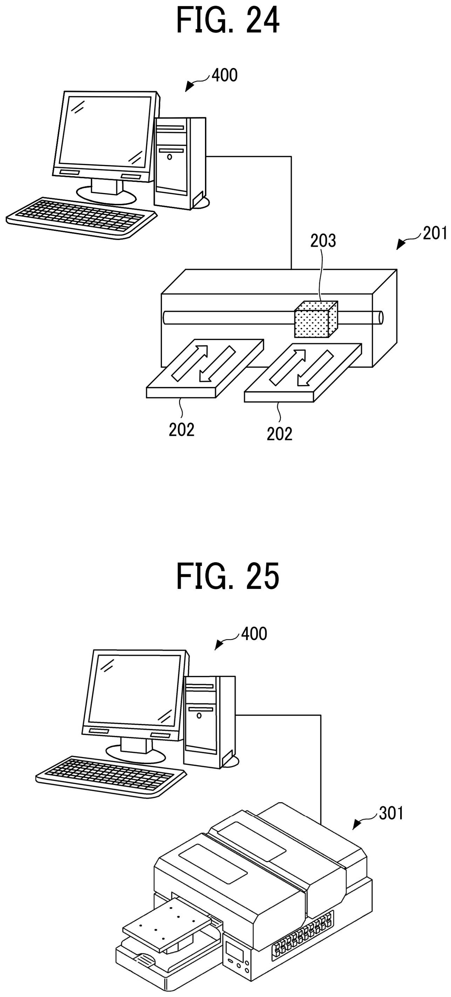

As illustrated in FIG. 24, an image forming system according to the first modification of the first embodiment includes a printing unit 201 as an example of the matte-expression-portion formation means and the transfer-film production means and a gloss-expression-portion forming unit as an example of the gloss-expression-portion formation means, and performs the matte-expression-portion formation step and the transfer-film production step in parallel. In the first modification, the single printing unit 201 performs both the matte-expression-portion formation step and the transfer-film production step.

The printing unit 201 is implemented by the matte-expression-portion forming unit 1 and the transfer-film production unit 101.

Specifically, in the first modification, the printing unit 201 according to the first modification includes multiple platens, namely, a matte-expression-portion formation platen used in the matte-expression-portion formation step and a transfer-film production platen used in the transfer-film production step. The multiple platens are scanned with the same print heads. This allows the matte-expression-portion formation step and the transfer-film production step to be performed in parallel.

Performing the two steps in parallel can increase the productivity. In addition, performing the two steps with a single printing unit can reduce the size of the entire image forming system.

As illustrated in FIG. 25, an image forming system according to a second modification of the first embodiment includes a printing unit 301 as an example of the matte-expression-portion formation means and the transfer-film production means, and a gloss-expression-portion forming unit as an example of the gloss-expression-portion formation means, and sequentially performs the matte-expression-portion formation step and the transfer-film production step. In the second modification, the single printing unit 301 performs both the matte-expression-portion formation step and the transfer-film production step.

The printing unit 301 is implemented by the matte-expression-portion forming unit 1 and the transfer-film production unit 101.

The printing unit 301 according to the second modification performs the matte-expression-portion formation step by DTG printing, then switches from DTG printing to DTF printing, and performs the transfer-film production step. A single printing unit can perform two steps and does not include multiple platens. This can reduce the size of the printing unit and the entire image forming system.

As the gloss-expression-portion forming unit in the first embodiment including the first modification and the second modification, any desired device for performing heat-pressure transfer such as a heat press machine may be used. For example, the DTG printing apparatus such as the transfer-film production unit 101 may be used.

The image forming system executes an image forming method in response to an instruction from a computer. A single computer may be connected to the units to collectively control the units. Alternatively, two or more computers may control the units in a distributed manner. The computer operates based on a program to execute the image forming method.

A liquid discharge apparatus 1 will be described as an example of the matte-expression-portion forming unit (DTG printing apparatus). Identical reference numerals are assigned to identical or equivalent components throughout the drawings and a description of those components may be simplified or omitted.

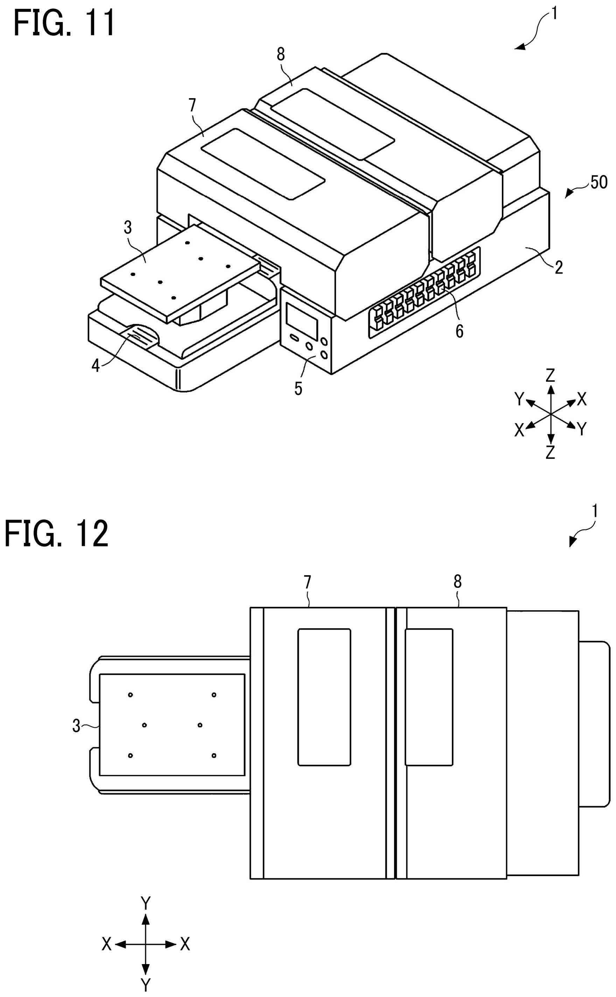

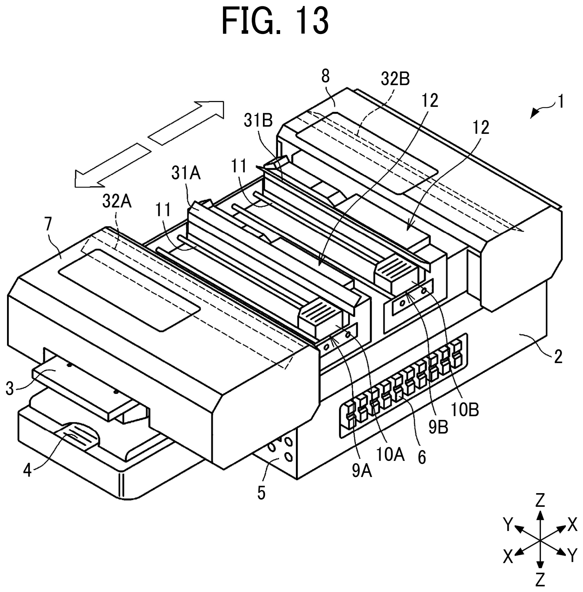

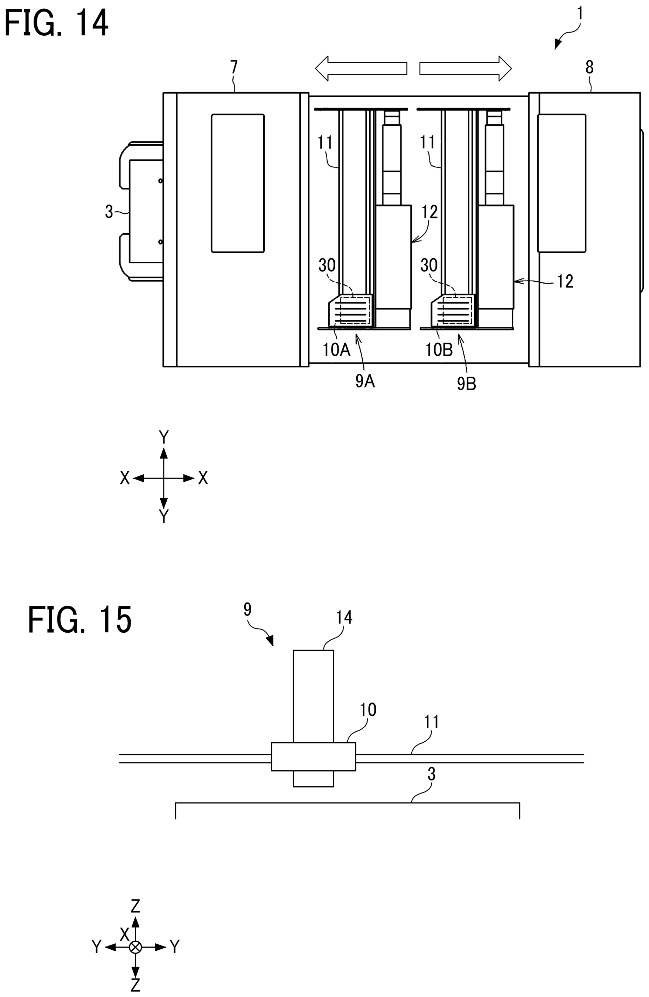

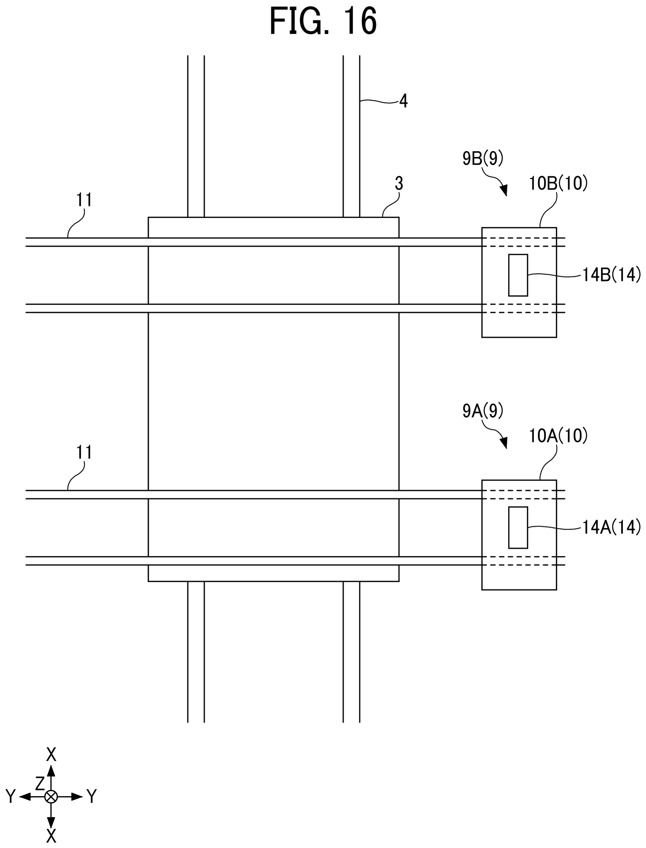

FIG. 11 is a perspective view of an example of the liquid discharge apparatus 1 which is an example of the matte-expression-portion forming unit. FIG. 12 is a plan view of an example of the liquid discharge apparatus 1 which is an example of the matte-expression-portion forming unit. FIG. 13 is a perspective view of an example of the liquid discharge apparatus 1 which is an example of the matte-expression-portion forming unit and illustrates the liquid discharge apparatus 1 whose covers 7 and 8 are open. FIG. 14 is a plan view of an example of the liquid discharge apparatus 1 which is an example of the matte-expression-portion forming unit and illustrates the liquid discharge apparatus 1 whose covers 7 and 8 are open. FIG. 15 is a front view of an example of a carriage 10 located above a stage 3. FIG. 16 is a plan view of an example of the stage 3 and the carriage 10.

FIG. 11 illustrates an X-axis direction, a Y-axis direction, and a Z-axis direction that are orthogonal to one another. The X-axis direction is a direction along a conveyance direction of a recording medium and is a sub-scanning direction. The X-axis direction may be a front-rear direction of the liquid discharge apparatus 1. The Y-axis direction is a moving direction of carriages 10A and 10B illustrated in FIGs. 15 and 16 and is a main-scanning direction. The Z-axis direction is along an up-down direction.

The X-axis direction, the Y-axis direction, and the Z-axis direction are any given directions, and are not necessarily orthogonal to one another. Some of the other drawings illustrate the X-axis direction, the Y-axis direction, and the Z-axis direction. The term "direction" may include not only one direction but also an opposite direction.

The liquid discharge apparatus 1 illustrated in FIGs. 11 to 14 is a liquid discharge apparatus to discharge a liquid onto a recording medium. The liquid is ink, for example. The liquid discharged by the liquid discharge apparatus 1 is not limited to ink.

The liquid discharge apparatus 1 includes the stage 3 at a front of a housing 2. The stage 3 is also called a platen. The stage 3 is movable in the X-axis direction along a guide rail 4. The guide rail 4 extends in the X-axis direction. The housing 2 is provided with an operation panel 5 on the front surface thereof. The housing 2 has an ink cartridge 6 mounted on a side surface thereof. Above the housing 2, the front cover 7 and the rear cover 8 are provided as cover members. The "front cover 7 and rear cover 8" may be simply referred to as "covers 7 and 8".

An upper surface of the stage 3 is a receiving surface on which a recording medium is placed, and has a flat shape. The upper surface of the stage 3 is a surface parallel to the X-axis direction and the Y-axis direction. The stage 3 has, for example, a plate shape and a predetermined weight. The stage 3 is reciprocally movable in the X-axis direction along the guide rail 4.

The stage 3 is movable up and down in the Z-axis direction. The liquid discharge apparatus 1 can adjust a height of a recording medium placed on the stage 3.

The covers 7 and 8 are movable in the X-axis direction. FIGs. 11 and 12 illustrate the liquid discharge apparatus 1 whose covers 7 and 8 are closed. FIGs. 13 and 14 illustrate the liquid discharge apparatus 1 whose covers 7 and 8 are open as described above.

The liquid discharge apparatus 1 includes an apparatus body. The apparatus body includes the housing 2 and liquid discharge units 9A and 9B. The apparatus body is a portion of the liquid discharge apparatus 1 other than the covers 7 and 8. The "liquid discharge units 9A and 9B" may be referred to as a "liquid discharge unit 9".

When the covers 7 and 8 are open, the inside of the liquid discharge apparatus 1 is opened to outside of the liquid discharge unit 9. When the covers 7 and 8 are open, maintenance work can be performed on the liquid discharge apparatus 1. Herein, the maintenance work includes work of cleaning the inside of the liquid discharge apparatus 1 and work of replacing components. A user may clean a maintenance unit 30, the liquid discharge unit 9, and surroundings thereof as the maintenance work. The user may perform work of replacing the carriages 10A and 10B as the maintenance work.

When the liquid discharge apparatus 1 forms an image, the covers 7 and 8 are closed. Thus, the liquid discharge unit 9 inside the liquid discharge apparatus 1 is covered by the covers 7 and 8, and movable members such as the carriages 10A and 10B are not accessible from the outside during image formation. Since the liquid discharge unit 9 is located in a space closed by the covers 7 and 8, scattering of mist to outside of the liquid discharge apparatus 1 is prevented during liquid discharge. Inside the liquid discharge apparatus 1, mist may be circulated and collected by circulating an airflow.

The liquid discharge apparatus 1 includes the multiple liquid discharge units 9A and 9B. The liquid discharge units 9A and 9B are arranged in the X-axis direction. The liquid discharge unit 9A discharges color ink and white ink. The liquid discharge unit 9B discharges a pretreatment liquid. The liquid discharged by each of the liquid discharge units 9A and 9B is not limited to the aforementioned liquid. Each of the liquid discharge units 9A and 9B may discharge any given liquid among the color ink, the white ink, and the pretreatment liquid. In particular, when the recording medium is cloth (fabric), the pretreatment liquid is preferably applied to the recording medium before an image is formed using the ink. Thus, one of the liquid discharge units 9A and 9B preferably discharges the pretreatment liquid.

The liquid discharge unit 9A includes the carriage 10A, a guide rod 11, an electrical unit 12, and the maintenance unit 30. The electrical unit 12 includes a board and an electrical cover. Similarly to the liquid discharge unit 9A, the liquid discharge unit 9B includes the carriage 10B, the guide rod 11, the electrical unit 12, and the maintenance unit 30. The "carriages 10A and 10B" may be described as a "carriage 10".

The carriage 10 is provided with multiple liquid discharge heads 14 that discharge liquid. The "liquid discharge heads 14" may be simply referred to as "discharge heads 14". The discharge heads 14 each include a pressure chamber for storing liquid, a diaphragm that generates pressure in the liquid inside the pressure chamber, a flow path through which the liquid flows, and a nozzle plate in which nozzles for discharging the liquid are formed.

The guide rod 11 extends in the Y-axis direction. The carriage 10 is movable in the Y-axis direction along the guide rod 11.

The liquid discharge apparatus 1 includes a carriage drive mechanism for moving the carriage 10.

The carriage drive mechanism includes a main-scanning motor 13 serving as a power source for moving the carriage 10, and the above-described guide rod 11 that guides movement of the carriage 10. The carriage drive mechanism also includes a power transmission mechanism that transmits power from the main-scanning motor 13. The power transmission mechanism may include a pulley and a belt, may include a rack and pinion, or may include other members.

As illustrated in FIG. 14, the maintenance unit 30 is located at a position facing the guide rod 11 in the up-down direction and outside a liquid discharge region in the Y-axis direction. The liquid discharge region is a region where liquid can be discharged onto the recording medium, and may be a print region.

The maintenance unit 30 includes a wiping member for cleaning a nozzle surface of the discharge heads 14 and a suction mechanism for sucking the nozzle surface. The wiping member may be a wiper made of, for example, rubber, or a web made of, for example, nonwoven fabric.

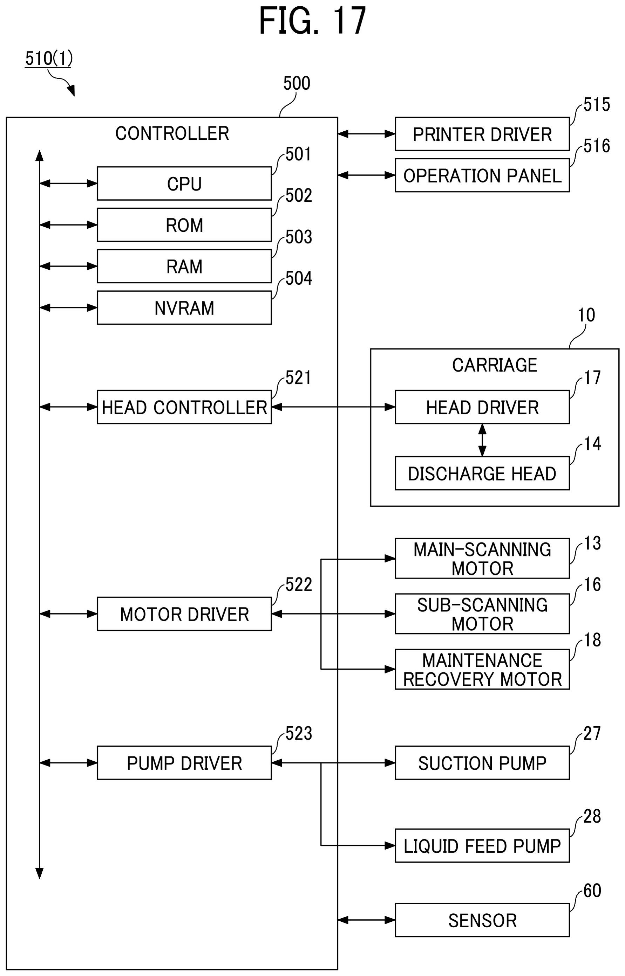

The liquid discharge apparatus 1 includes a stage drive mechanism for moving the stage 3. The stage drive mechanism includes a sub-scanning motor 16 (see FIG. 17) serving as a power source for moving the stage 3, and the guide rail 4 (see FIG. 16) that guides movement of the stage 3. The stage drive mechanism may include a ball screw, a rack and pinion, a pulley, a belt, a slider, and the like.

An example of an operation of the liquid discharge apparatus 1 will be described. The liquid discharge apparatus 1 moves a recording medium placed on the stage 3 in the X-axis direction. The stage 3 is movable in the X-axis direction along the guide rail 4. The stage 3 is conveyed to a rear side of the liquid discharge apparatus 1.

A discharge head 14B of the liquid discharge unit 9B applies the pretreatment liquid onto the recording medium. The liquid discharge apparatus 1 discharges the pretreatment liquid while moving the carriage 10B in the Y-axis direction along the guide rod 11. The pretreatment liquid is discharged from nozzles of the discharge head 14B.

The liquid discharge apparatus 1 then moves the stage 3 toward the front. After the movement of the stage 3 in the X-axis direction is completed, the liquid discharge unit 9A applies color ink of each color onto the recording medium.

The liquid discharge apparatus 1 discharges the ink while moving the carriage 10A in the Y-axis direction along the guide rod 11. The ink is discharged from the nozzles of the discharge head 14A.

A hardware configuration of the liquid discharge apparatus 1 will be described below with reference to FIG. 17. FIG. 17 is a block diagram illustrating an example of the hardware configuration of the liquid discharge apparatus 1 that is an example of the matte-expression-portion forming unit. The liquid discharge apparatus 1 includes a control device 510 including a controller 500.

The controller 500 is connected to a printer driver 515. The printer driver 515 generates image data. The printer driver 515 may generate image data in an information processing terminal such as a personal computer (PC), an image reading apparatus such as an image scanner, or a host apparatus such as an imaging apparatus such as a digital camera. The printer driver 515 may divide the generated image data into matte-expression-portion data and gloss-expression-portion data, and may cause only the matte-expression-portion data to be output as an image by the liquid discharge apparatus 1. The printer driver 515 generates dot pattern data to allow the liquid discharge apparatus 1 to output an image.

The controller 500 includes a central processing unit (CPU) 501, a read-only memory (ROM) 502, a random access memory (RAM) 503, and a non-volatile random access memory (NVRAM) 504.

The CPU 501 is a processor and controls the operation of the entire liquid discharge apparatus 1. The CPU 501 performs control related to movement of the stage 3, movement of the carriage 10, and a liquid discharging operation performed by the discharge heads 14. The ROM 502 is a read-only non-volatile storage medium. The ROM 502 stores programs such as firmware. The RAM 503 is a volatile storage medium that enables high-speed reading and writing of information. The RAM 503 is used as a work area when the CPU 501 processes information.

The NVRAM 504 is a non-volatile storage medium that enables reading and writing information. The NVRAM 504 stores an operating system (OS), various control programs, application programs, and the like.

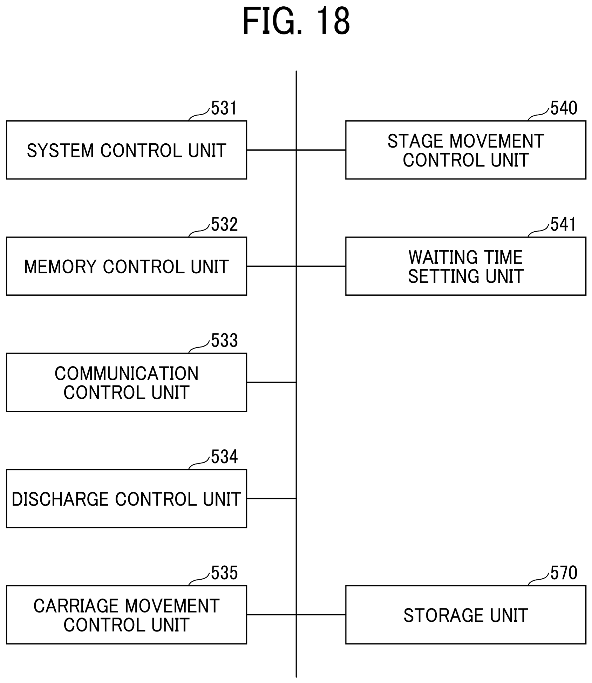

A program stored in a storage unit 570 (see FIG. 18) is read into the RAM 503. The CPU 501 performs computation in accordance with the program loaded into the RAM 503 to implement software control units. The storage unit 570 includes the ROM 502 and the NVRAM 504. The storage unit 570 may include a storage medium such as an optical disc.

A combination of hardware and the software control units configures functional blocks that implement functions of the liquid discharge apparatus 1. The CPU 501 and the RAM 503 function as various control units as illustrated in FIG. 18. The various control units will be described below.

The liquid discharge apparatus 1 includes an operation panel 516. The operation panel 516 is connected to the controller 500. The operation panel 516 is an input device operable by a user to input instructions. The operation panel 516 may be, for example, a liquid crystal panel. The user can change printing conditions by operating the operation panel 516. The user can also change various conditions by operating the operation panel 516. The user can change settings of a head cleaning operation by operating the operation panel 516. Information input through the operation panel 516 is sent to the controller 500. The operation panel 516 may be a display and an input device of a terminal (PC) connected to the controller 500.

The liquid discharge apparatus 1 includes a sensor 60. The sensor 60 may be a camera that images a nozzle surface of the discharge heads 14. The sensor 60 may be a sensor group including multiple types of sensors. The sensor 60 may be a temperature sensor that measures a temperature inside the liquid discharge apparatus 1 (inside the apparatus).

The sensor 60 may be a sensor that detects a position of the stage 3. The sensor 60 may be a sensor that detects a position of the carriage 10.

The controller 500 includes a head controller 521 that controls driving of the discharge heads 14. The head controller 521 can control operation of a head driver 17 for driving the discharge heads 14. The head driver 17 is provided in the carriage 10 and is electrically connected to the discharge heads 14. The head driver 17 is also called a driver integrated circuit (IC). The head controller 521 controls drive elements of the discharge heads 14 to discharge liquid. The head controller 521 performs various types of control related to the discharge heads 14.

The head controller 521 includes a driving signal generation unit that generates a driving signal for controlling driving of the discharge heads 14, and a data transfer unit that transfers the driving signal to the head driver 17.

The controller 500 transfers processed image data from the head controller 521 to the head driver 17.

The head controller 521 transfers the aforementioned image data as serial data. The head controller 521 may transfer, to the head driver 17, a transfer clock signal used for transfer of the image data and confirmation of the transfer. The head controller 521 may output, to the head driver 17, a latch signal and a control signal for controlling discharge of the liquid.

The driving signal generation unit of the head controller 521 includes a digital-to-analog (D/A) converter, a voltage amplifier, and a current amplifier. The D/A converter performs D/A conversion of pattern data of a drive pulse stored in the ROM 502, for example. The drive pulse is included in the driving signal. The voltage amplifier amplifies a voltage based on the drive pulse, for example. The current amplifier may amplify a current based on the drive pulse. The driving signal generation unit outputs, to the head driver 17, a driving signal including a single drive pulse or multiple drive pulses.

The head driver 17 supplies a piezoelectric element with a voltage based on the drive pulse to discharge the liquid from the discharge head 14. The head controller 521 selectively uses a drive pulse to selectively form dots of different sizes, for example, large droplets, medium droplets, and small droplets.

The liquid discharge apparatus 1 includes the main-scanning motor 13, the sub-scanning motor 16, and a maintenance recovery motor 18. The controller 500 includes a motor driver 522. The motor driver 522 controls driving of the main-scanning motor 13, the sub-scanning motor 16, and the maintenance recovery motor 18. The motor driver 522 controls driving of the main-scanning motor 13, the sub-scanning motor 16, and the maintenance recovery motor 18 in accordance with commands from the CPU 501.

The main-scanning motor 13 is a motor for driving the carriage 10. The sub-scanning motor 16 is a motor for moving the stage 3. The maintenance recovery motor 18 may be a motor for raising and lowering a cap that covers the nozzle surface of the discharge head 14. The suction mechanism of the maintenance unit 30 includes the cap that covers the nozzle surface, and the maintenance recovery motor 18 for raising and lowering the cap. The liquid discharge apparatus 1 may include other motors, and the motor driver 522 may control driving of the other motors. The motor driver 522 controls rotation and stopping of various motors.

The motor driver 522 controls rotation and stopping of the main-scanning motor 13 to control the start and the end of movement of the carriage 10. The motor driver 522 controls driving of the main-scanning motor 13 to control acceleration and speed of the carriage 10. The acceleration includes a speed change during acceleration and a speed change during deceleration.

The motor driver 522 controls rotation and stopping of the sub-scanning motor 16 to control the start and the end of movement of the stage 3. The motor driver 522 controls driving of the sub-scanning motor 16 to control acceleration and speed of the stage 3. The acceleration includes a speed change during acceleration and a speed change during deceleration.

The liquid discharge apparatus 1 includes a suction pump 27 and a liquid feed pump 28. The controller 500 includes a pump driver 523. The pump driver 523 controls driving of the suction pump 27 and the liquid feed pump 28. The pump driver 523 controls driving of the suction pump 27 and the liquid feed pump 28 in accordance with commands from the CPU 501.

The maintenance unit 30 includes the suction pump 27. The suction pump 27 sucks the nozzle surface covered with the cap to remove liquid adhered to the nozzle surface of the discharge head 14.

The liquid feed pump 28 supplies ink contained in the ink cartridge 6 to the carriage 10. The carriage 10 may be provided with a head tank that stores ink. The ink in the head tank is supplied to the discharge head 14. The liquid feed pump 28 may be a reversible pump including, for example, a tube pump or the like.

The functional configuration of the controller of the liquid discharge apparatus 1 is described below with reference to FIG. 18.

The liquid discharge apparatus 1 includes a system control unit 531, a memory control unit 532, a communication control unit 533, a discharge control unit 534, a carriage movement control unit 535, a stage movement control unit 540, a waiting time setting unit 541, and a storage unit 570.

The system control unit 531 controls the overall operation of the liquid discharge apparatus 1. The memory control unit 532 controls the memory provided for the liquid discharge apparatus 1 such as the ROM 502, RAM 503 or NVRAM 504. The communication control unit 533 controls a communication circuit provided for the liquid discharge apparatus 1. The discharge control unit 534 controls the operation of discharging, which is performed, for example, by the discharge head 14. The carriage movement control unit 535 controls the movement of the carriage 10. The stage movement control unit 540 controls the movement of the stage 3. The waiting time setting unit 541 sets a waiting time. The storage unit 570 controls storing of various data in any desired memory.

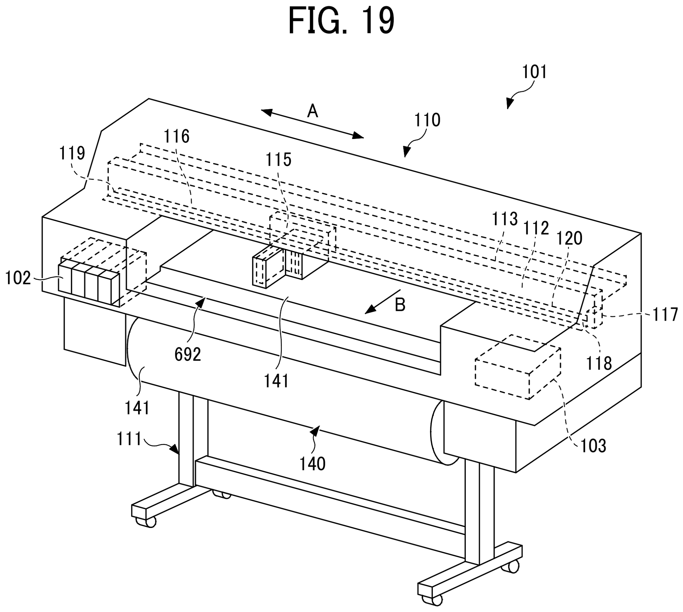

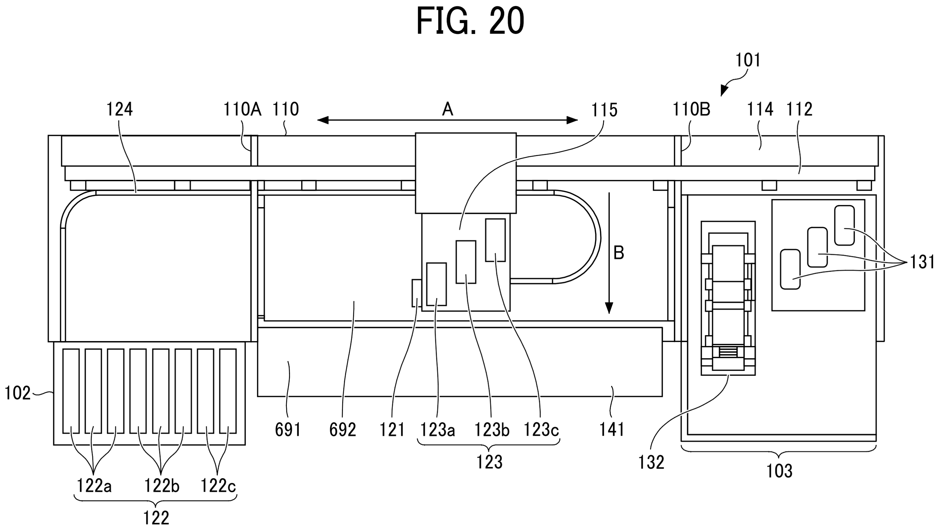

The transfer-film production unit (DTF printing apparatus) will be described. FIG. 19 is a perspective view of an example of a liquid discharge apparatus 101 which is an example of a transfer-film production unit. FIG. 20 is a diagram illustrating an example of a configuration of the liquid discharge apparatus 101 which is an example of the transfer-film production unit. As illustrated in FIGs. 19 and 20, the liquid discharge apparatus 101 includes an apparatus body 110 and a support base 111 that supports the apparatus body 110.

The apparatus body 110 includes side plates 110A and 110B on the left and right of the apparatus body 110. A guide rod 112 and a guide stay 113, which are guide members, are bridged between the side plates 110A and 110B. The liquid discharge apparatus 101 includes a sub sheet metal guide 114. The guide rod 112 and the guide stay 113 slidably hold a carriage 115.

A main-scanning mechanism 116 moves the carriage 115. The main-scanning mechanism 116 includes a main-scanning motor 117, a drive pulley 118, a driven pulley 119, and a timing belt 120. The main-scanning motor 117 is arranged on one side in the main-scanning direction. The drive pulley 118 is rotationally driven by the main-scanning motor 117. The driven pulley 119 is arranged on the other side in the main-scanning direction. The timing belt 120 is a traction member looped around the drive pulley 118 and the driven pulley 119. Tension is applied to the driven pulley 119 outward (in a direction away from the drive pulley 118) by a tension spring.

The carriage 115 moves in a direction of arrow A (i.e., the main-scanning direction) via the timing belt 120 rotationally driven by the main-scanning motor 117. The carriage 115 is provided with an optical sensor 121 that detects an end of a medium (e.g., an end of a sheet).

The carriage 115 includes a liquid discharge head 123 that discharges ink droplets of respective colors, for example, black (K), yellow (Y), magenta (M), and cyan (C), according to a mounted ink cartridge 122.

The liquid discharge head 123 in this example is an example of a liquid discharge unit, and includes heads 123a, 123b, and 123c, for example. When the heads 123a, 123b, and 123c are described without distinction, the heads 123a, 123b, and 123c may be referred to as the liquid discharge head 123. The liquid discharge head 123 has nozzle rows, and the nozzle rows are arranged in a direction of arrow B (i.e., the sub-scanning direction). The sub-scanning direction is orthogonal to the main-scanning direction. The liquid discharge head 123 is mounted such that a droplet discharge direction faces downward.

The heads 123a, 123b, and 123c of the liquid discharge head 123 are arranged with shifted from each other in the sub-scanning direction, for example. The carriage 115 is provided with sub tanks to supply inks of the respective colors to the liquid discharge heads 123. In addition, for example, white ink and clear ink may be supplied.

The liquid discharge apparatus 101 includes a cartridge mount 102 on which ink cartridges 122a, 122b, and 122c of the respective colors are removably mounted. Ink in the ink cartridge 122 is supplied to the sub tank of the carriage 115 through a supply tube 124 of each color by a supply pump unit. The ink cartridge 122 may include a white ink cartridge and the like.

The liquid discharge apparatus 101 includes a maintenance recovery mechanism 103 in a non-printing region on one side of the carriage 115 in the main-scanning direction. The maintenance recovery mechanism 103 maintains or recovers a state of the liquid discharge head 123.

The maintenance recovery mechanism 103 includes caps 131 to cover nozzle faces of the liquid discharge head 123 and a wiper unit 132 to wipe the nozzle faces. A replaceable waste liquid tank that stores waste liquids caused by a maintenance recovery operation is disposed below the maintenance recovery mechanism 103.

A sheet 141 is placed in a sheet feeding means 140. The sheet 141 having a different size in the width direction can also be set in the sheet feeding means 140. A transfer base may be used as the sheet 141.

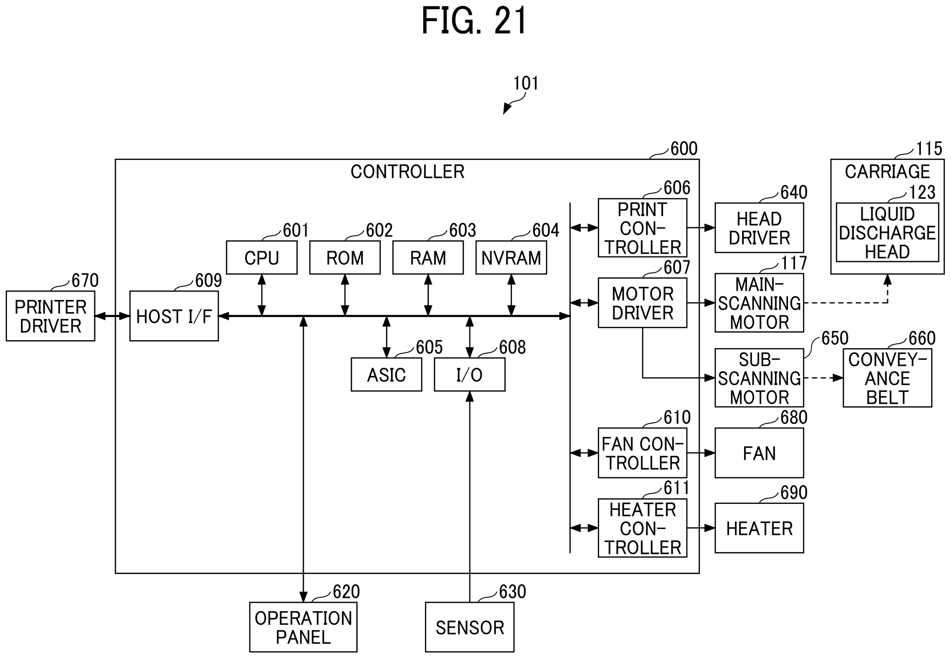

FIG. 21 is a block diagram illustrating a hardware configuration of the liquid discharge apparatus 101 that is an example of the transfer-film production unit. As illustrated in FIG. 21, the liquid discharge apparatus 101 includes a controller 600, an operation panel 620, a sensor 630, a head driver 640, the main-scanning motor 117, a sub-scanning motor 650, the carriage 115, a conveyance belt 660, a printer driver 670, a fan 680, and a heater 690.

The controller 600 includes a CPU 601, a ROM 602, and a RAM 603.

The CPU 601 controls the entire liquid discharge apparatus 101. The ROM 602 stores fixed data such as programs executed by the CPU 601. The RAM 603 temporarily stores image data and the like.

The controller 600 includes an NVRAM 604 and an application specific integrated circuit (ASIC) 605.

The NVRAM 604 is a non-volatile memory that retains data even while power supply to the liquid discharge apparatus 101 is shut off. The ASIC 605 performs image processing, such as various signal processing and sorting on image data, and processing of input and output signals for controlling the entire liquid discharge apparatus 101.

The controller 600 includes a print controller 606. The carriage 115 transfers data for driving the liquid discharge head 123 to the head driver 640. The head driver 640 drives the liquid discharge head 123 mounted on the carriage 115 to cause the liquid discharge head 123 to discharge ink.

The controller 600 includes a motor driver 607. The motor driver 607 drives the main-scanning motor 117 and the sub-scanning motor 650. The main-scanning motor 117 is driven to move the carriage 115. The sub-scanning motor 650 is driven to rotate the conveyance belt 660.

The controller 600 includes an input/output (I/O) 608. The I/O 608 acquires information from the sensor 630 and extracts information used for controlling each unit of the liquid discharge apparatus 101. For example, the sensor 630 corresponds to a sensor group including a photo sensor, a temperature sensor, and an encoder sensor.

The operation panel 620 inputs and outputs various types of data.

The controller 600 includes a host interface (I/F) 609. The host I/F 609 transmits and receives data and signals to and from a host. Specifically, the host I/F 609 transmits and receives data and signals to and from the printer driver 670 of the host (e.g., an information processing apparatus such as a client PC, an image reading apparatus, or an image capturing device) via a cable or a network. The printer driver 670 may divide the generated image data into matte-expression-portion data and gloss-expression-portion data, and may cause only the gloss-expression-portion data to be output as an image by the liquid discharge apparatus 101. The CPU 601 reads and analyzes the image data in a reception buffer included in the host I/F 609. The ASIC 605 performs the image processing and the sorting on the image data, and the image data is transferred from the print controller 606 to the head driver 640.

The print controller 606 transfers the image data as serial data, and outputs, for example, a transfer clock, a latch signal, and a control signal, which are used to transfer the image data, to the head driver 640. The head driver 640 selectively applies drive pulses forming a drive waveform given from the print controller 606 to a pressure generation means of the liquid discharge head 123 based on the image data that is serially input and corresponds to one line to be formed by the liquid discharge head 123. Thus, the liquid discharge head 123 is driven to discharge liquid.

At this time, by selecting a part or all of the driving pulses forming the drive waveform or a part or all of waveform elements forming the driving pulses, dots having different sizes such as large droplets, medium droplets, or small droplets, for example, can be discharged separately.

The controller 600 includes a fan controller 610 and a heater controller 611. The fan controller 610 controls the output of the fan 680 to blow air at a predetermined temperature and air volume. The heater controller 611 controls the heater 690 to a set temperature.

The fan 680 is driven to accelerate the convection of air inside the liquid discharge apparatus 101 so as to prevent the temperature from increasing excessively due to the accumulation of warm air in an upper portion of the liquid discharge apparatus 101.

The fan 680 is connected to the fan controller 610 of the controller 600.

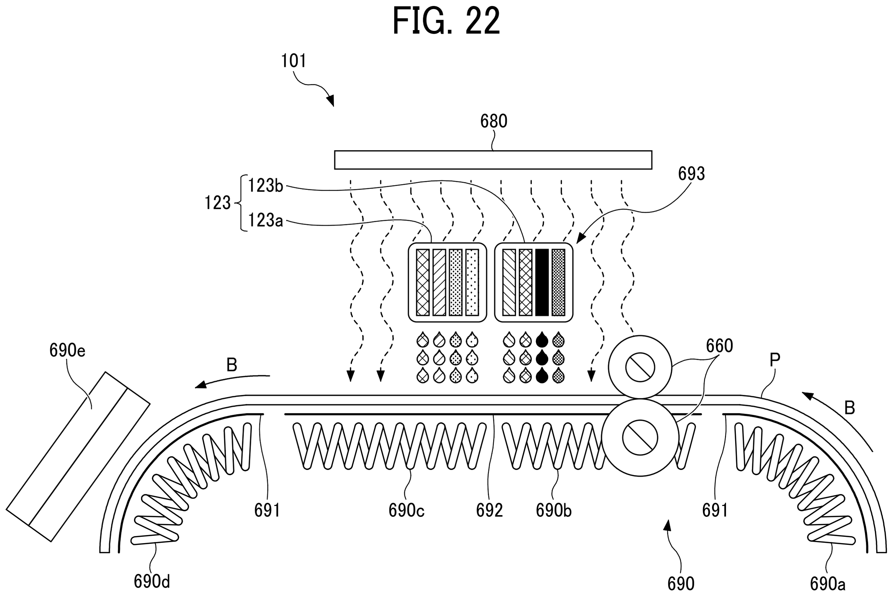

FIG. 22 is a diagram illustrating an example of a configuration of the heater 690 of the liquid discharge apparatus 101 which is an example of the transfer-film production unit. In the example illustrated in FIG. 22, for the sake of simplicity, a part of the liquid discharge head 123 is omitted.

As illustrated in FIG. 22, the heater 690 includes a preheater 690a, a print heater 690b, a print heater 690c, a post heater 690d, and a drying heater 690e. Each of the heaters 690a to 690e of the heater 690 is provided with a temperature sensor such as a thermistor for temperature control.

The preheater 690a is a device that preheats a medium P to a temperature suitable for forming a liquid application surface. For example, the preheater 690a is an aluminum foil cord heater. The preheater 690a is attached to the back surface of a conveyance guide plate 691. The preheater 690a heats the conveyance guide plate 691 to heat the medium P.

The print heater 690b and the print heater 690c are devices that heat the medium P when the liquid application surface is formed on the medium P. For example, the print heater 690b and the print heater 690c are cord heaters embedded in a platen 692 made of aluminum material. The print heater 690b and the print heater 690c heat the platen 692 to heat the medium P, for example.

The post heater 690d and the drying heater 690e are devices that heat the medium P having the liquid application surface formed thereon to dry and fix the liquid such as ink on the medium P. For example, the post heater 690d may be an aluminum foil cord heater. The post heater 690d is attached to the back surface of the conveyance guide plate 691. The post heater 690d heats the conveyance guide plate 691 to heat the medium P. For example, the drying heater 690e is an infrared (IR) heater. The drying heater 690e irradiates the liquid application surface of the medium P with IR radiation to dry the medium P. The drying heater 690e may be provided with a fan to send hot air to the liquid application surface of the medium P.

FIG. 23 is a schematic diagram illustrating a configuration example of the matte-expression-portion forming unit and the transfer-film production unit of the image forming system according to the first embodiment. The liquid discharge apparatus 1, which serves as the matte-expression-portion forming unit, and the liquid discharge apparatus 101, which serves as the transfer-film production unit, are connected to a single computer 400. Thus, the matte-expression-portion formation step and the transfer-film production step can be performed in parallel and the productivity can be increased.

FIG. 24 is a schematic diagram illustrating a configuration example of the printing unit of the image forming system according to the first modification. The liquid discharge apparatus 201, in which a single print head 203 scans over multiple platens 202, is connected to the computer 400. Since the matte-expression-portion formation step and the transfer-film production step can be performed in parallel, the productivity can be increased. In addition, since the two steps can be performed by a single printing unit, the size of the overall system can be reduced.

FIG. 25 is a schematic diagram illustrating a configuration example of the printing unit of the image forming system according to the second modification. The liquid discharge apparatus 301 serving as a printing unit that can switch between the matte-expression-portion formation step and the transfer-film production step is connected to the computer 400. Since two steps can be sequentially performed using the single liquid discharge apparatus 301, the size of the overall system can be reduced.

For example, aspects of the embodiments are as follows.

According to Aspect 1, an image forming method is for forming a partially glossy image on a recording medium by performing printing based on image data input to an inkjet printing apparatus. The image data is divided into and input as matte-expression-portion data and gloss-expression-portion data. The partially glossy image includes a matte expression portion and a gloss expression portion. The image forming method includes a matte-expression-portion formation step of forming the matte expression portion by performing printing on the recording medium based on the matte-expression-portion data. The image forming method includes a transfer-film production step of producing a transfer film having an inverted image of the gloss expression portion by performing printing on a film base based on the gloss-expression-portion data. The image forming method includes a gloss-expression-portion formation step of forming the gloss expression portion by performing transfer onto the recording medium using the transfer film.

According to Aspect 2, an image forming method is for forming a partially glossy image on a recording medium by performing printing based on image data input to an inkjet printing apparatus. The partially glossy image includes a matte expression portion and a gloss expression portion. The image forming method includes an image data division step of dividing the image data into matte-expression-portion data and gloss-expression-portion data based on designation data input to the inkjet printing apparatus. The image forming method includes a matte-expression-portion formation step of forming the matte expression portion by performing printing on the recording medium based on the matte-expression-portion data. The image forming method includes a transfer-film production step of producing a transfer film having an inverted image of the gloss expression portion by performing printing on a film base based on the gloss-expression-portion data. The image forming method includes a gloss-expression-portion formation step of forming the gloss expression portion by performing transfer onto the recording medium using the transfer film.

According to Aspect 3, in the image forming method of Aspect 1 or 2, processing of enlarging the gloss-expression-portion data by 0.5 mm or greater and 2 mm or less is performed prior to the transfer-film production step by copying pixel data in an outer edge portion of the gloss-expression-portion data and arranging the copied pixel data at positions adjacent to the pixel data in the outer edge portion.

According to Aspect 4, in the image forming method of any one of Aspects 1 to 3, the matte-expression-portion data includes an overlap region in an outer edge portion. The overlap region is a region where the matte expression portion and the gloss expression portion overlap when the partially glossy image is formed. The overlap region has a width of 0.5 mm or greater.

According to Aspect 5, in the image forming method of any one of Aspects 1 to 4, a white ink layer is not formed on the inverted image in the transfer-film production step.

According to Aspect 6, an image forming system is for forming a partially glossy image on a cloth fabric by performing printing based on image data input to an inkjet printing apparatus. The image data is divided into and input as matte-expression-portion data and gloss-expression-portion data. The partially glossy image includes a matte expression portion and a gloss expression portion. The image forming system includes a matte-expression-portion forming unit, a transfer-film production unit, and a gloss-expression-portion forming unit. The matte-expression-portion forming unit performs a matte-expression-portion formation step of forming the matte expression portion by performing printing on the cloth fabric based on the matte-expression-portion data. The transfer-film production unit performs a transfer-film production step of producing a transfer film having an inverted image of the gloss expression portion by performing printing on a film base based on the gloss-expression-portion data. The gloss-expression-portion forming unit performs a gloss-expression-portion formation step of forming the gloss expression portion by performing transfer onto the cloth fabric using the transfer film. The matte-expression-portion formation step and the transfer-film production step are performed in parallel.

According to Aspect 7, an image forming system is for forming a partially glossy image on a cloth fabric by performing printing based on image data input to an inkjet printing apparatus. The image data is divided into and input as matte-expression-portion data and gloss-expression-portion data. The partially glossy image includes a matte expression portion and a gloss expression portion. The image forming system includes a printing unit and a gloss-expression-portion forming unit. The printing unit performs a matte-expression-portion formation step of forming the matte expression portion by performing printing on the cloth fabric based on the matte-expression-portion data and a transfer-film production step of producing a transfer film having an inverted image of the gloss expression portion by performing printing on a film base based on the gloss-expression-portion data. The gloss-expression-portion forming unit performs a gloss-expression-portion formation step of forming the gloss expression portion by performing transfer onto the cloth fabric using the transfer film. In the printing unit, a single print head scans over multiple platens. The multiple platens include a matte-expression-portion formation platen for performing the matte-expression-portion formation step and a transfer-film production platen for performing the transfer-film production step. The matte-expression-portion formation step and the transfer-film production step are performed in parallel.

According to Aspect 8, an image forming system is for forming a partially glossy image on a cloth fabric by performing printing based on image data input to an inkjet printing apparatus. The image data is divided into and input as matte-expression-portion data and gloss-expression-portion data. The partially glossy image includes a matte expression portion and a gloss expression portion. The image forming system includes a printing unit and a gloss-expression-portion forming unit. The printing unit performs a matte-expression-portion formation step of forming the matte expression portion by performing printing on the cloth fabric based on the matte-expression-portion data and a transfer-film production step of producing a transfer film having an inverted image of the gloss expression portion by performing printing on a film base based on the gloss-expression-portion data. The gloss-expression-portion forming unit performs a gloss-expression-portion formation step of forming the gloss expression portion by performing transfer onto the cloth fabric using the transfer film. The printing unit sequentially performs the matte-expression-portion formation step and the transfer-film production step.

According to Aspect 9, a program causes a computer to execute the image forming method of any one of Aspects 1 to 5.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An image forming method for forming a partially glossy image including a matte expression portion and a gloss expression portion, based on image data input to a liquid discharge apparatus, the image data being divided into matte-expression-portion data and gloss-expression-portion data, the image forming method comprising:
forming (S7) the matte expression portion on a cloth fabric based on the matte-expression-portion data;
producing (S6) a transfer film having an inverted image of the gloss expression portion by performing printing on a film base based on the gloss-expression-portion data; and
forming (S7) the gloss expression portion by performing transfer onto the cloth fabric using the transfer film.

2. The image forming method according to claim 1, further comprising:
enlarging (S5) the gloss-expression-portion data by 0.5 mm or greater and 2 mm or less prior to the producing (S6) of the transfer film, wherein
the enlarging (S5) includes:
copying pixel data in an outer edge portion of the gloss-expression-portion data; and
arranging the copied pixel data at positions adjacent to the pixel data in the outer edge portion.

3. The image forming method according to claim 1 or 2, wherein
the matte-expression-portion data includes an overlap region in an outer edge portion,
the forming (S7) of the gloss expression portion includes performing transfer to make the matte expression portion and the gloss expression portion overlap with each other in the overlap region, and
the overlap region has a width of 0.5 mm or greater.

4. The image forming method according to any one of claims 1 to 3, wherein the producing (S6) of the transfer film includes performing printing without forming a white ink layer on the inverted image.

5. Carrier means carrying computer readable code for controlling a computer system to carry out the image forming method of any one of claims 1 to 4.

6. An image forming system for forming a partially glossy image including a matte expression portion and a gloss expression portion, based on image data input to a liquid discharge apparatus, the image data being divided into matte-expression-portion data and gloss-expression-portion data, the image forming system comprising:
a matte-expression-portion forming unit (1) configured to form the matte expression portion on a cloth fabric based on the matte-expression-portion data;
a transfer-film production unit (101) configured to produce a transfer film having an inverted image of the gloss expression portion by performing printing on a film base based on the gloss-expression-portion data; and
a gloss-expression-portion forming unit (101) configured to form the gloss expression portion by performing transfer onto the cloth fabric using the transfer film, wherein
formation of the matte expression portion and production of the transfer film are performed in parallel.
